# EUROPEAN PATENT SPECIFICATION

(11) **EP 0 464 790 B1**
(45) Date of publication and mention of the grant of the patent: **28.05.1997**
(21) Application number: 91111024.5
(22) Date of filing: 03.07.1991
(51) Int. Cl.: B29D 9/00, B29C 47/14, B32B 27/08

(54) **Process and apparatus for making thermoplastic resin sheets**
Verfahren und Vorrichtung zur Herstellung einer thermoplastischen Harzschicht
Procédé et appareille pour la fabrication d'une feuille de thermoplastique

(30) Priority: 03.07.1990 JP 176902/90
(43) Date of publication of application: 08.01.1992
(73) Proprietor: SEKISUI KAGAKU KOGYO KABUSHIKI KAISHA, Osaka-shi Osaka 530 (JP)
(72) Inventor: Urui, Yasuhiro, Kusatu-shi, Shiga-ken (JP); Omizu, Morimasa, Okayama-shi, Okayama-ken, (JP)
(74) Representative: Reitzner, Bruno, Dr.

(56) References cited:
- US-A- 3 400 190
- US-A- 3 715 420
- US-A- 3 799 718
- US-A- 4 316 868

## Description

### BACKGROUND OF THE INVENTION

### 1. Field of the Invention

The present invention relates to a process that uses an extrusion mold to manufacture thermoplastic resin sheets having along their widthwise direction a first resin section comprising only a clear thermoplastic resin and a second resin section in which a colored band comprising a colored thermoplastic resin is encapsulated within the clear resin, and an apparatus for manufacturing such sheets.

The windshield glass used in automobiles, and airplanes, and the laminated glass used in windows of buildings, and elsewhere comprise a middle film of plasticized polyvinyl butyral sandwiched between two facing glass plates. Such laminated glass has great strength, and fragments do not fly around when the glass is broken.

### 2. The Prior Art

A method of manufacturing the middle films used in such laminated glass is known. This method feeds to an extrusion mold polyvinyl butyral that has been heated to melting while being mixed in a cylinder, and extrudes it from the extrusion mold to obtain a thin film for use in the middle of the glass layers.

The middle film so obtained is colorless and transparent, and most of the light passes through this middle film. In order to restrict the transmission of light, attempts have been made to provide a band-shaped colored section along part of the width of the middle film.

For example, in the thermoplastic resin sheets used in automobile windshields, the amount of sunlight shining on the driver through the windshield can be reduced by creating a colored section with a color gradient at the top of the sheet.

The colored section is usually provided in the sheet by printing a band-shaped colored section on the surface of a film made of polyvinyl butyral. However, when the colored section is formed by applying ink, there is the disadvantage that the colored section peels away easily from the film surface. Moreover, after the polyvinyl butyral resin film has been formed, the colored section must be formed, and the manufacturing process is complex, and the equipment is unavoidably of a large scale.

In particular, US-A-3 799 718 discloses an apparatus for making a thermoplastic resin sheet having a band of color. The sheet is a two-layer sheet. The color band is not encapsulated.

US-A-3 715 420 discloses a process for making a thermoplastic resin sheet having a band of color. The sheet is a two-layer sheet. The color band is not encapsulated.

US-A-3 400 190 discloses a method and an apparatus for making a multi-layer sheet wherein the inner layer of the sheet is encapsulated by two outer layers by having a narrow slot for extruding the inner sheet within the major stream of resin. The inner sheet and outer sheet are co-extensive. The layers are formed by parallel flows. No transverse flows are disclosed in this document.

In Japanese patent publication Hei-1-43606 (U.S.-A-4,316,868), a process is disclosed for manufacturing sheets with a colored band having a certain width encapsulated within the thermoplastic resin. In this process, the thermoplastic resin main flow goes into the manifold and is extruded through an extrusion passage and from a slit-shaped die extrusion mold, and colored thermoplastic resin is extruded from a pipe orifice which is encapsulated in the main flow.

A 3-layer thermoplastic resin sheet in which colored thermoplastic resin is encapsulated in thermoplastic resin is obtained by using an extrusion mold that has a manifold into which thermoplastic resin is fed, and also has a pipe located in said manifold that feeds colored resin into the manifold, as well as a slit-shaped die orifice that serves as the extrusion sheet outlet. The clear thermoplastic resin main flow goes into the manifold and is extruded through the slit-shaped die extrusion mold. The colored thermoplastic resin extruded from the wedge-shaped orifice provided in the probe is encapsulated in the main flow of resin.

This process has the following problems.
1. As the colored resin is extruded parallel to the flow of the main resin, the boundary between the main resin and the colored resin encapsulated in the main resin is clear. In other words, the edges of the colored band are clearly visible. By giving the pipe orifice a wedge shape, the boundary between the colored band and the main flow resin can be made somewhat unclear, but there are limits to this technique.
2. As the pipe is offset to one side of the manifold, the flow of clear thermoplastic resin passing from the manifold through to the slit-shaped die orifice is nonuniform. The amount of the resin extrusion flow is nonuniform and the widthwise thickness of the sheet easily becomes nonuniform.
3. As the probe is fastened to the mold on only one side, the position of the pipe changes within the manifold and the shape and sheet thickness of the colored belt are unstable.

### SUMMARY OF THE INVENTION

This invention solves the above disadvantages and its object is to provide a manufacturing process and apparatus for thermoplastic resin sheets in which the edge of the colored band encapsulated in the main resin flow is diffuse.

Another object of this invention is to provide a manufacturing process and an apparatus for thermoplastic resin sheets in which the flow of resin within the manifold is uniform.

Yet another object of this invention is to provide a manufacturing process and an apparatus for thermoplastic resin sheets in which the position of the opening through which the colored thermoplastic resin is extruded in the manifold does not change so that the shape of the colored band and the sheet thickness are stable.

The invention comprises a process for making thermoplastic resin sheets having along their widthwise direction a first resin section comprising only a clear thermoplastic resin (a) and a second resin section in which a colored band comprising a colored thermoplastic resin (b) encapsulated within the clear resin is formed, comprising the steps of:
(a) using an extrusion mold having along its widthwise direction a clear resin (a) section manifold, and a colored resin (b) feed means within said manifold;
(b) introducing said clear resin (a) into said manifold and said colored resin (b) into said feed means including a colored resin feed passage;
(c) extruding said colored resin (b) and said clear resin (a) through a slit-shaped die orifice;
(d) providing a land between said manifold and said slit-shaped die orifice;
(e) providing an opening in the colored resin feed passage in a position where there is widhtwise flow of said clear resin (a) within said manifold;
this process is characterized in that said clear resin (a) is introduced from the side of said manifold adjacent to said colored band, and that the widthwise flow of said clear resin (a) is in the direction away from said colored band.

The widthwise flow of the clear thermoplastic resin is sufficiently great to cause at least a portion of the colored resin to flow in a general widthwise direction and to cause the colored resin to increase in width which is greater than the width of the die orifice for the colored resin feed passage, thereby to produce a gradual transition from the colored resin to the clear resin.

This invention also comprises an apparatus for making thermoplastic resin sheets having along their widthwise direction a first resin section, comprising only a clear thermoplastic resin (a) and a second colored resin section in which a colored band comprising a colored thermoplastic resin (b) is encapsulated; comprising:
an extrusion mold having along its widthwise direction a clear resin (a) section manifold and a colored resin (b) feed pipe within said manifold including a colored resin feed passage;
side plates provided widthwise on both sides of said manifold for supporting the ends of said feed pipe;
a passage for for feeding said clear resin (a) into said manifold;
a slit-shaped die orifice through which said clear resin (a) and said colored resin (b) are extruded;
and a land provided between said manifold and said slit-shaped die orifice;
this apparatus is characterized in that the clear resin (a) feed passage is located at the side of said manifold adjacent to said colored band, and that the opening of said colored resin feed passage is located in a position where there is widthwise flow of said clear resin (a) in the direction away from said colored band.

An opening for feeding colored thermoplastic resin (b) is provided at a position where the clear thermoplastic resin (a) has a flow in a widthwise direction within the manifold, so that the colored thermoplastic resin and a portion of the clear thermoplastic resin flow in different directions. The outer portion of the colored thermoplastic resin (b) that contacts the clear thermoplastic resin is strongly affected by the main flow of the clear thermoplastic resin (a). The center portion of the colored resin is, however, little affected by the main flow. Therefore, the center portion of the colored resin flows from the opening just about in the direction of extrusion of the colored thermoplastic resin, but an outer portion of the colored thermoplastic resins flows in a direction that is a composite of the direction of extrusion from the orifice of the colored thermoplastic resin, and the widthwise direction of flow of the first clear thermoplastic resin.

Since there is clear resin (a) in the composite direction of flow of the two resins, the colored resin (b) is diluted with clear resin. As a result, the width of the colored thermoplastic resin (hereafter referred to as the colored band) increases and the thickness of the colored band gradually decreases along the widthwise direction of flow of the clear resin. The boundary portion (tip) of the colored band becomes extremely thin, and a gradient portion is formed in which the colored section varies from dark to light.

In the apparatus of the present invention, an opening in the cylindrical inner pipe is provided at a position for feeding the colored thermoplastic resin (b) at a position where the clear thermoplastic resin (a) has a flow in the widthwise direction within the manifold. The colored thermoplastic resin being extruded from the orifice is affected by the widthwise flow of the thermoplastic resin, thereby to produce a sheet with a gradual color gradient.

Moreover, since the cylindrical shaped pipe runs the entire width of the manifold, the clear thermoplastic resin (a) fed into the manifold flows without disruption across the entire width of the manifold. In addition, each end of the pipe is supported by one of the side walls of the extrusion mold, so the position of the pipe opening does not change within the manifold.

Another preferred apparatus of the present invention is characterized in that the colored resin feed means comprises an extrusion die plate having an opening extending widthwise and being located within said manifold for introducing said colored resin (b) into said clear resin (a) to form two layers of said first resin;
wherein the sides of said opening are not entirely parallel to each other;
wherein the clear resin (a) feed passage is located at the side of said manifold adjacent to said colored band, and wherein the opening of said colored resin feed passage is located in a position where there is widthwise flow of said clear resin (a) in the direction away from said colored band.

Since the die plate runs the entire width of the manifold, thermoplastic resin fed into the manifold flows without disruption across the entire width of the manifold. In addition, the die plate is fastened to the wall at the far end of the manifold of the extrusion mold, so the position of the die plate opening does not change within the manifold.

Preferred process and apparatus features are recited in the dependent claims.

### BRIEF DESCRIPTION OF THE DRAWINGS

Figure 1 is a horizontal cross section of an apparatus for making thermoplastic resin sheets of this invention.

Figure 2 is a cross section along the line II-II in Figure 1.

Figure 3 is a front view of the pipe within the manifold.

Figure 4 is a diagram of the clear resin and colored resin flow.

Figures 5 (a) - (c) explain the working of the thermoplastic resin sheet.

Figure 6 is a horizontal cross-section of another preferred embodiment of the apparatus for making thermoplastic resin sheets of this invention.

Figure 7 is a cross section along the line VII-VII in Figure 6.

Figures 8 (a) and (b) are the front view and the plane view.

Figure 9 is a cross section along the line IX-IX in Figure 8.

Figure 10 is a horizontal cross section of another preferred embodiment of the apparatus for making thermoplastic resin sheets of this invention.

Figure 11 is a cross section along the line XI-XI in Figure 10.

Figures 12 (a) and (b) are front and side views for another inner pipe.

Figures 13 (a) and (b) are front and side views for yet another inner pipe.

Figure 14 shows the dimensions of the orifice.

Figure 15 shows the color ratio for the clear resin and the colored resin.

Figure 16 is a graph showing the relation between the horizontal axis (the colored band size) and the vertical axis (the color ratio).

Figure 17 is a graph showing the relation between the horizontal axis (the colored band size) and the vertical axis (the light transmissivity ratio).

Figure 18 shows the dimensions of the opening.

Figure 19 is a graph showing the relation between the horizontal axis (the colored band size) and the vertical axis (the color ratio).

Figure 20 is a graph showing the relation between the horizontal axis (the colored band size) and the vertical axis (the light transmissivity ratio).

Figure 21 shows another embodiment of this invention wherein the cylindrical inner pipe is placed off center within the extrusion of the clear resin.

Figure 22 shows a graph of the width of a colored resin extrusion orifice as a function of width. In this figure, the sides are not parallel.

Figure 23 shows a cross-sectional view of the main mold assembly of the embodiments shown in Figures 21 and 22.

Figure 24a shows a representation of the cross-section of the orifice from the inner cylindrical pipe.

Figure 24b shows a cross-section of the melt of the colored resin after the resin has passed through the colored resin feed passage and subjected to spreading and position shift as a result of the cross-flows in the widthwise direction present in the clear flow during merger of the two resins.

### DETAILED DESCRIPTION OF THE PREFERRED EMBODIMENTS

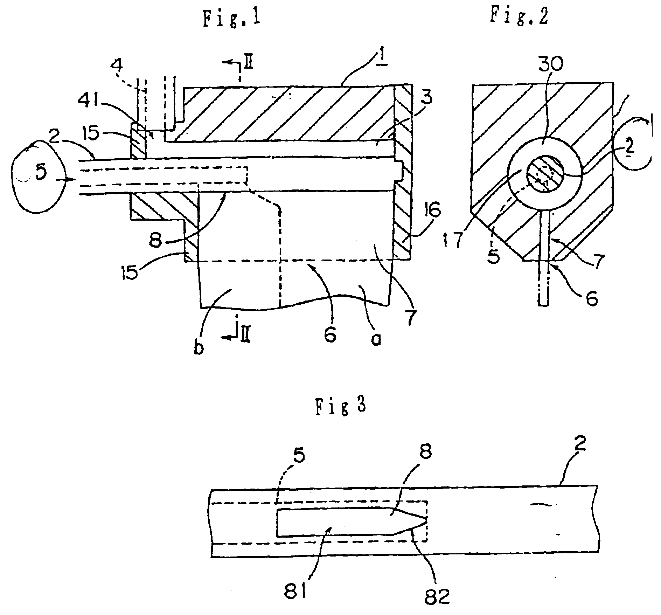

Figure 1 and Figure 2 show an apparatus for making the thermoplastic resin sheets of this invention.

This apparatus has an extrusion mold 1 and a cylindrical inner pipe 2. Mold 1 comprises the manifold 3 in which the inner pipe 2 is located, side plates 15 and 16 at the sides of the manifold 3, a clear resin feed passage 4 which feeds the melted clear thermoplastic resin a into manifold 3, a slit-shaped die orifice 6 that serves as the extrusion sheet outlet, and a land 7 that serves as the resin passage through which resin is passed from the manifold 3 to the die orifice 6.

Manifold 3 has a virtually circular cross section and extends across almost the entire width of extrusion mold 1. The inlet 41 for the first resin is at one end of this manifold 3 and clear thermoplastic resin (a) is fed into the manifold 3 from the resin extrusion apparatus (not shown in the figure) through clear resin (a) feed passage 4 and resin (a) inlet opening 41. When the resin (a) is fed into the manifold 3 and fills the manifold 3, it moves in the axial direction of the manifold 3, that is in the widthwise direction of the extrusion mold 1, and is extruded from the land 7 to the slit-shaped die orifice 6. A thermoplastic resin sheet is extruded with virtually the same width as the manifold 3.

The inner pipe 2 located in the manifold 3 is virtually cylindrical. Said cylindrical inner pipe 2 extends across the entire width of the manifold 3 and is located either concentric with the manifold 3 or slightly offset towards the land 7. The two ends of the cylindrical inner pipe 2 are supported by the side plates 15, 16 mentioned above to form the gap 17 between the outer surface of the cylindrical inner pipe 2 and the inner wall of the manifold 3 around the entire circumference.

One side (the previously mentioned resin inlet opening 41 side) of cylindrical inner pipe 2 is empty and colored resin feed passage 5 is located here. This colored resin feed passage 5 opens into manifold 3 at the opening 8. Colored resin feed passage 5 is connected to the colored thermoplastic resin extrusion apparatus (not shown in the figure), and the colored thermoplastic resin extruded from said extrusion apparatus flows from colored resin feed passage 5 through the opening 8 and into the manifold 3.

Figure 3 shows the shape of this opening 8. Opening 8 comprises a rectangular first portion 81 which is long and thin in the horizontal direction and a triangular second portion 82 that is connected with the first portion 81 and whose vertical dimension becomes gradually smaller. Opening 8 is positioned to face the land 7 previously described. The vertical gap dimension of the opening 8 is set smaller than the vertical gap dimension of the slit-shaped die orifice 6. The first portion 81 of the opening 8 is positioned on the side of the first resin feed passage 4 and the second part 82 is positioned on the opposite side. It is desirable that the length of the opening 8 be less than half the length of slit-shaped die orifice 6. A length 1/10 to 1/3 of the length of slit-shaped die orifice 6 is particularly desirable.

### OPERATION

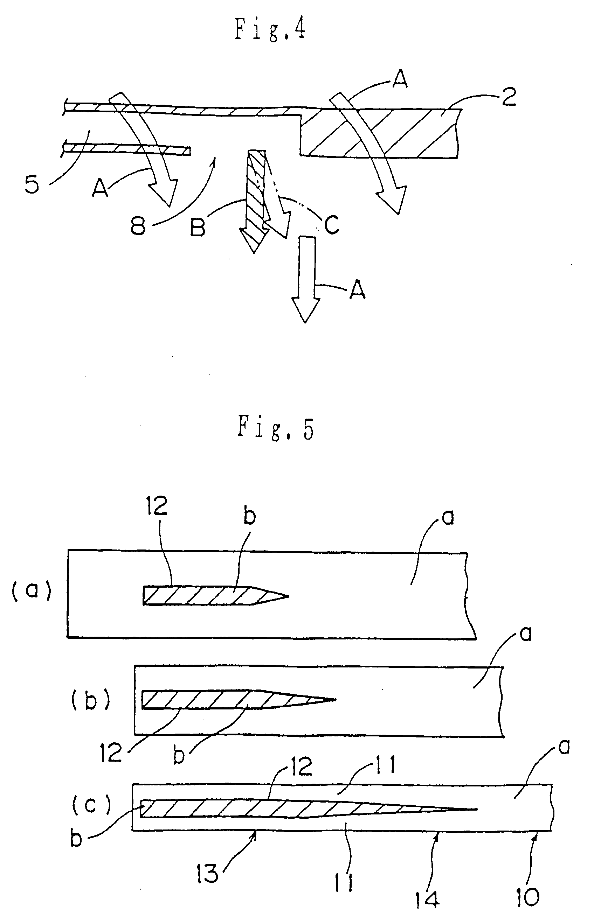

Clear thermoplastic resin (hereafter referred to as clear resin (a)) is fed by an extruder into the manifold 3 through the passage 4 and the opening 41. Clear resin (a) fills the manifold 3 gradually from the opening 41 and is extruded toward the outside from the land 7 to the slit-shaped die orifice 6. In the steady state in which the clear resin (a) is fed into the manifold 3, then extruded from the die orifice 6, the flow vectors (resin flow direction and speed) are different at different positions within the manifold 3, see Fig. 4.

As Figure 4 shows, the direction of vector A of the flow of clear resin (a) is a composite of the direction widthwise within manifold 3 and the sheet extrusion direction. The reason why the widthwise flow of the clear resin (a) is generated within the manifold 3 is that the inflow opening 41 for the clear resin (a) is on one section (in Figure 1, on the left end) of the wall of the manifold 3. Normally at the upper end of manifold 3, vector A has a relatively large component for the resin flow in the widthwise direction of the manifold 3 and a relatively small component for the resin flow toward sheet extrusion. At the end close to the land 7, vector A has a relatively small component for the resin flow in the widthwise direction of the manifold 3 and a relatively large component for the resin flow toward sheet extrusion. At the die orifice 6, there is almost no resin flow widthwise across the manifold 3 and the resin flow is only in the sheet extrusion direction.

On the other hand, the colored thermoplastic resin (hereafter referred to as colored resin) (b) fed into colored resin feed passage 5 of the pipe 2 is sent into the manifold 3 from the opening 8 of the pipe 2. The opening 8 is positioned within the manifold 3 where the widthwise flow of clear resin (a) is generated as discussed above. Therefore, the colored resin (b) coming out of the opening 8 is affected by the flow of clear resin (a) in the following manner.

The colored resin (b) coming out of the opening 8 flows in the direction in which it is fed (nearly the sheet extrusion direction). The flow direction for colored resin (b) near the orifice 8 is the sheet extrusion direction. The flow of the portion of the colored resin (b) that encounters the clear resin (a) is changed by the flow of the clear resin. As explained above, since the clear resin (a) flow vector A has a component in the widthwise direction within the manifold 3, the outer portion of colored resin (b) (the portion near clear resin (a)) is greatly affected by the flow of clear resin (a) and flows along vector C, which is a composite of vector B for the original flow of colored resin (b) and vector A for the flow of clear resin (a). The center portion of colored resin (b), which is only slightly affected by the flow of clear resin a flows virtually in the sheet extrusion direction.

Thus, the vectors for the flow of the colored resin (b) in the middle of the flow thickness and at the edge differ; thus, as Figures 5 (a) - (c) show, the colored band 12 gradually becomes wider and the tip portion of the moving side of the colored band 12 is extremely thin. Also, since there is clear resin (a) at the outer portion of colored resin (b) in the direction it is moving, colored resin (b) is diluted by clear resin (a). In this way, and as Figure 5 (c) shows, the sheet obtained has a first resin section 10 of only clear resin and a colored portion 13 with three layers along its width, two resin layers 11 made of clear resin (a), and the colored band 12 a sandwiched between the layers 11. A color gradient portion 14 is formed in which the color gradually changes from dark to light towards the section 10 side of resin (a).

The profile of this color gradient portion is determined by such conditions as the location within the manifold 3 of the opening 8 in the pipe 2, the shape and size of said opening 8, the amount and flow speed of clear resin (a) and colored resin (b), and the viscosities of the resins.

If the position of the opening 8 of the pipe 2 is moved within the manifold 3 towards the slit-shaped die orifice 6, then the widthwise flow component of colored resin (b) versus clear resin (a) is minimal, so the cross section of the gradient portion 14 resembles the shape of the opening 8 and the colored band 12 and the color gradient portion 14 are both narrower. On the other hand, if the location of the opening 8 is moved away from the die orifice 6 within the manifold 3, then the widthwise flow component of colored resin (b) versus clear resin (a) is large and the colored band 12 and the color gradient portion 14 are wider. The greater the width of the opening 8 of the pipe 2, the wider the colored band 12 and the color gradient portion 14.

If the ratio of the amount of colored resin (b) supplied and the amount of clear resin (a) supplied is changed, the clear resin (a) flow vector A and the colored resin (b) flow vector B change, and the cross-sectional shape and the size of the colored band 12 and color gradient portion 14 formed in the sheet change as well. It is desirable that the ratio between the amount of colored resin (b) fed and clear resin (a) fed be between 0.5/10 and 2/10. It is also desirable that the temperatures of colored resin (b) and of clear resin (a) be the same, but this is not absolutely necessary.

In this invention the thermoplastic resin used as clear resin (a) and as colored resin (b) may be, for example, polyethylene, polypropylene, polystyrene, polycarbonate, PVC, nylon, polyvinylacetal, acrylic, acetal, or polyester. Either the same one resin or two resins that can blend together are selected for clear resin (a) and colored resin (b). Plasticizers, fillers, etc. may be added to these thermoplastic resins. For laminated glass, it is desirable that plasticized polyvinyl butyral be used for both clear resin (a) and colored resin (b).

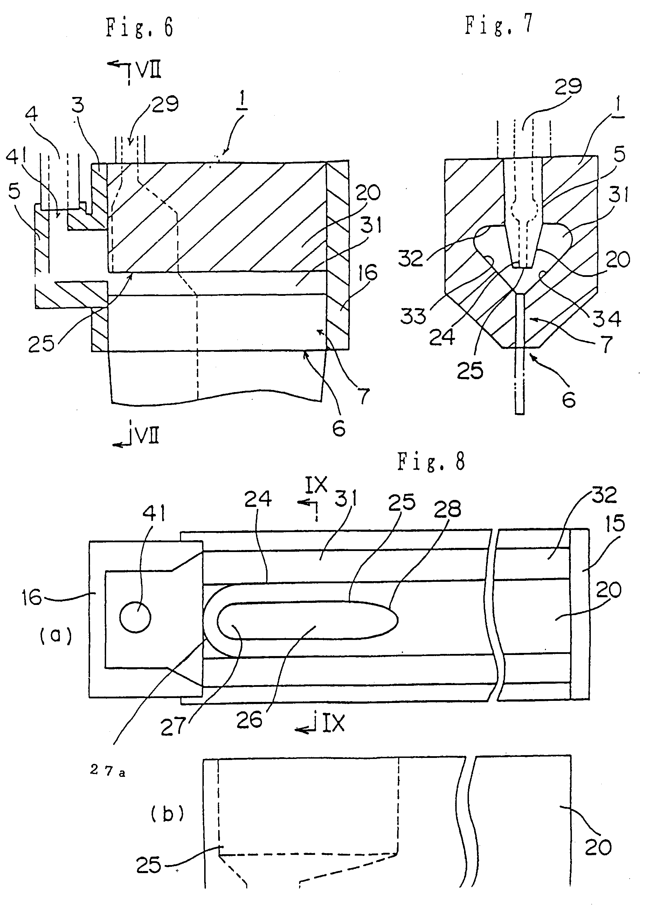

Figures 6 through 9 show another preferred embodiment. In this embodiment, a die plate 20 is used instead of the cylindrical inner pipe 2. Die plate 20 is fastened at the upper end of the manifold 31 and the nozzle 24 formed at the tip of this die plate projects into the manifold 31. Said nozzle 24 runs virtually the entire width of the manifold 31 and the end of the nozzle 24 at the clear resin (a) inlet opening 41 side is curved outward at 27a to prevent disruption of the flow of the first resin. An opening 25 is located at the nozzle 24 resin (a) inflow opening 41 side. As Figure 8 shows, said opening 25 is longer sideways and has a rectangularly shaped first portion 26, a semicircular second portion 27 and a third portion 28 on the other side of the first portion 26. Compared to the second portion 27, the third portion 28 has a smaller radius of curvature and the tip of the third portion 28 projects out more than the tip of the second portion 27. The nozzle 24 has a resin feed passage 29 for feeding colored resin (b). This resin feed passage 29 passes through the extrusion mold 1.

Manifold 31 has a triangular cross section. Manifold 31 has three walls, of which one wall 32 is at the upper side of the manifold 31. Wall 32 is horizontal. The other two walls, 33 and 34 connect to the wall 32 and slant to the land 7. The lower ends of these slanted walls 33 and 34 are separated by a gap with the same dimensions as slit-shaped die orifice 6. Nozzle 24 projects into the manifold 31 from the upper wall 32 and divides the manifold 31 space into top and bottom. It is desirable that the length of the opening 25 be no greater than 1/2 the length of the slit-shaped die orifice 6, and a ratio of from 1/10 to 1/3 is even better.

In this apparatus, the only point that differs from the embodiment of Figs. 1-5 is that colored resin (b) is fed into the manifold 31 from the opening 25 provided in the die plate 20.

Colored resin (b) fed into the manifold 31 from the opening 25 is affected by the flow of clear resin (a) within the manifold and, as described above a thermoplastic resin sheet is obtained with the colored band 12 of colored resin (b) encapsulated in clear resin (a). In this embodiment the shape and dimensions of the colored band 12 are determined by such factors as the position of the opening 25 in the manifold 31, the shape and size of the opening 25, the amount and speed of clear resin (a) and colored resin (b), and the viscosities of the resins.

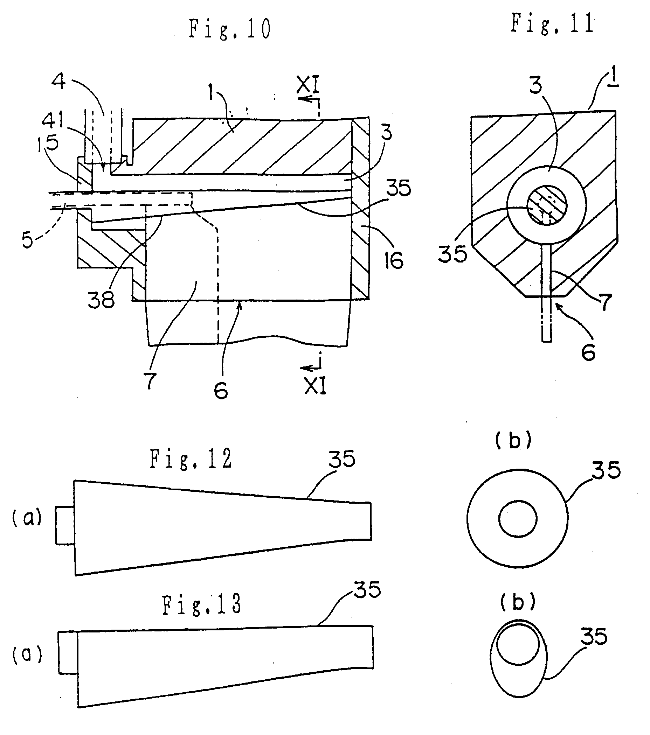

Figures 10 and 11 show another embodiment where a pipe 35, whose diameter varies along its axis, is used instead of the cylindrical inner pipe 2 in Figure 1. From the side of the resin (a) feed passage 4 (left side of Figure 10) of said pipe 35 to the right, the diameter of the pipe 35 becomes gradually smaller. Therefore the position of the opening 38 in this pipe is located farther into the manifold 3 as it moves to the right side of the pipe 35.

When forming extruded sheets using this apparatus, the colored resin (b) passed from the right side portion of the opening 38 to the manifold 3 has a greater flow component widthwise versus the clear resin (a) than the colored resin from the left side portion of the opening 38 has, so relatively large colored bands 12 and color gradient portions 14 can be formed.

The right side portion of the opening 38, in particular the right side tip, is farther into the manifold 3 than the other portions of the opening, so as a result, the colored resin (b) coming out of the right tip is more affected by the widthwise flow of clear resin (a), and the tip section of the colored band 12, (the color gradient portion 14) is thinner.

The shape of the pipe 35 can be gradually changed as Figures 12 and 13 show. The pipe 35 in Figure 12 has a circular cross section and gradually tapers to a smaller diameter from one end to the other. The pipe 35 in Figure 13 has an elliptical cross section.

With the process of this invention, thermoplastic resin sheets can be obtained with colored bands as described above. In particular, since full use is made of the widthwise flow of the clear thermoplastic resin within the manifold, a colored band is formed having a dark color section with a uniform dark coloration and next to that dark color a color gradient portion that becomes lighter as it extends across the width of the sheet. It is possible to continuously manufacture thermoplastic resin sheets with the extrusion molding method that are particularly useful for the colored bands of automobile front glass. Also, with the apparatus of this invention, the flow of resin within the manifold is uniform and thermoplastic resin sheets can be obtained in which the colored band shape and the sheet thickness are stable.

### EXAMPLE 1

This apparatus was as follows:
In the extrusion mold
Left-right width of slit-shaped die orifice (6): 1000 mm,
Manifold (3) diameter: 60 mm,
Pipe (2) diameter: 30 mm,
Resin feed passage (4) diameter: 18 mm,
Colored resin extrusion amount/clear resin extrusion amount = 0.1, and
Temperature of the resins 150 °C

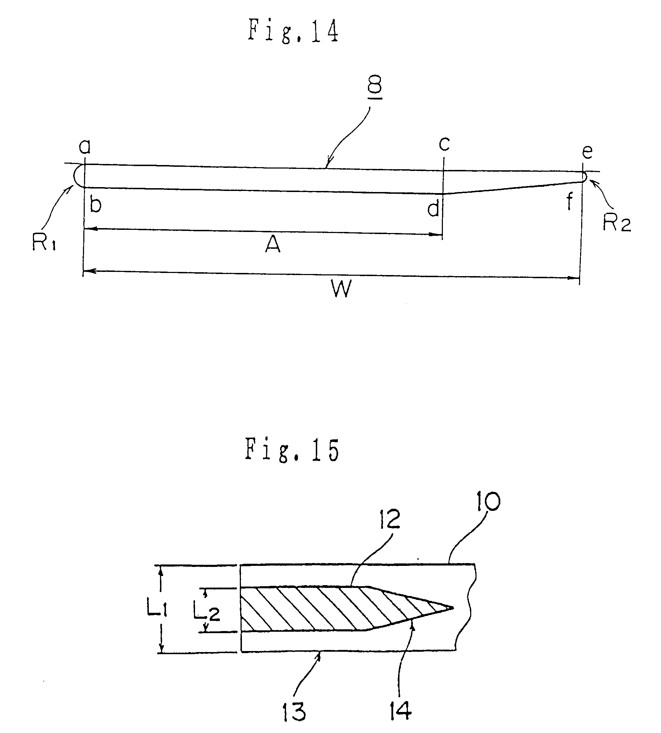

The shape of the pipe orifice is as shown in Figure 14 and the dimensions of all the parts shown in Figure 14 are as in Table 1.

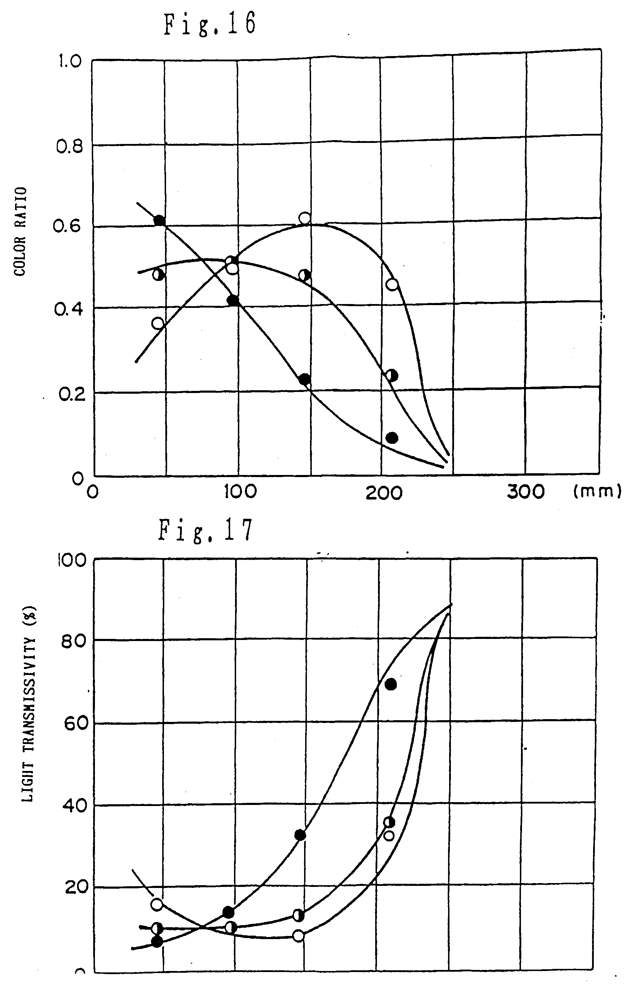

The results are shown in Table 2, Figure 16, and Figure 17. Figure 16 is a graph showing the relation between the horizontal axis (the colored band size) and the vertical axis (the color ratio, L2/L1 shown in Figure 15). Figure 17 is a graph showing the relation between the horizontal axis (the colored band size) and the vertical axis (the light transmissivity ratio).

In Table 2, the color width is the width of the colored band and the shade width shows the width of the colored band of Figure 17 in which the transmissivity ratio is 70-40%.

### EXAMPLE 2

Thermoplastic resin sheet was extruded using the apparatus shown in Figure 6.
In the extrusion mold
Left-right width of slit-shaped die orifice (6): 1000 mm,
Manifold (31) shape: a right-angled triangle with one side of 100 mm,
Die plate (20) nozzle thickness: 40 mm,
Resin feed (4) passage diameter: 18 mm
Clear resin extrusion amount: 35 kg/hour,
Clear resin temperature: 150 °C
Colored resin extrusion amount: 7 kg/hour, and
Colored resin temperature: 130 °C

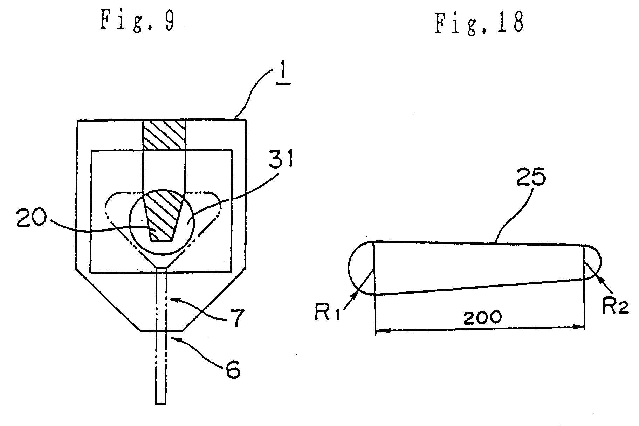

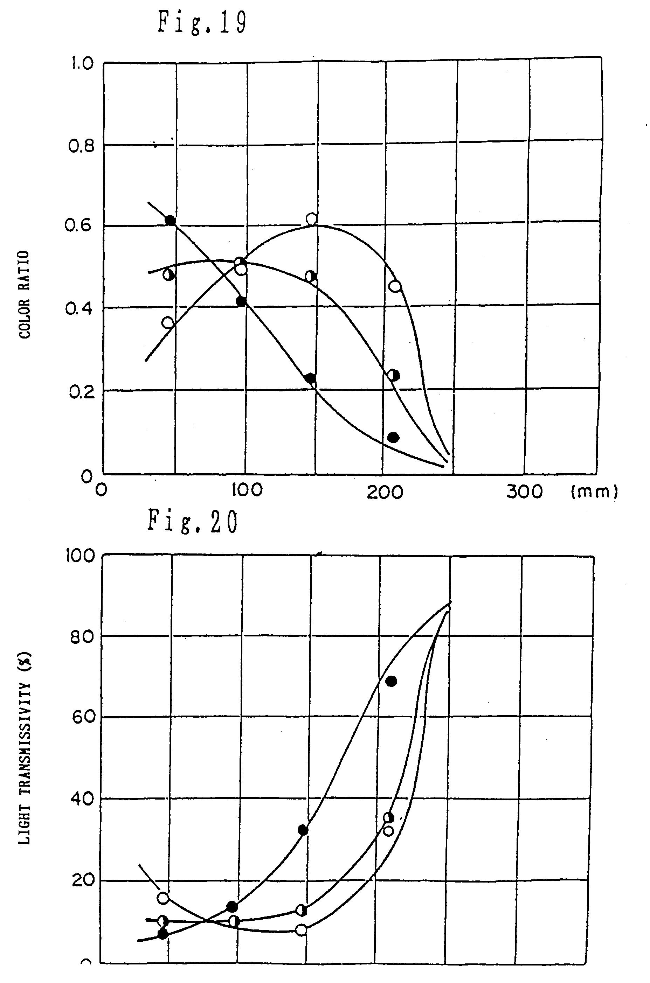

As Figure 18 and Table 3 show, there were two shapes for the opening. The dimensions of the parts shown in Figure 18 are as shown in Table 3. As a result, the thermoplastic resin sheets shown in Table 3, Figure 19, and Figure 20 were obtained.

### EXAMPLE 3

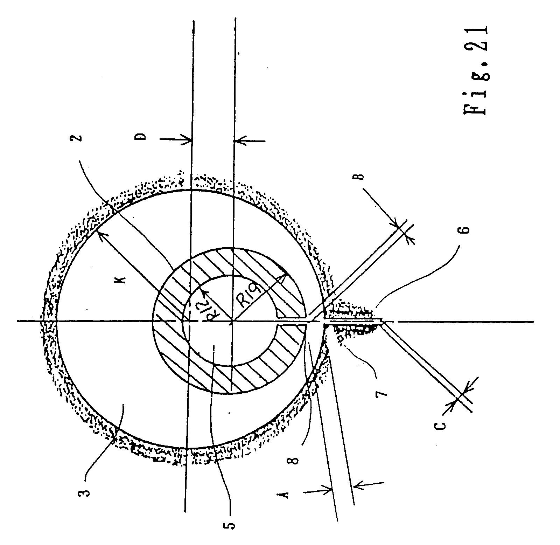

In Figure 21 there is shown a cross-sectional view of another example of this invention. The cross-sectional view of Fig. 21 is similar to the cross-sectional view of Fig. 2, and similar reference numerals have been used to indicate the same components. In this example, the radius of the clear flow first extrusion manifold 3 is 35 mm, the outside radius R19 of the cylindrical inner pipe 2 is 19 mm, and the inside radius R12 of the inner pipe is 12 mm. The spacing between the inside cylindrical pipe opening 8 and the entrance to the land 7 of the outside extrusion die is distance A which is 5 mm. In this example, the cylindrical inner pipe 2 is offset from the center of the extrusion manifold 3 in order to provide the appropriate spacing between the opening 8 and the entrance to the land 7. This offset is 11 mm. In this example, the width of the extrusion die orifice 6 is 1.2 to 2.5 mm (as shown at distance C). The width of the cylindrical inner pipe opening is variable in this example, and therefore the width B will range from 0.4 to 2.6 mm.

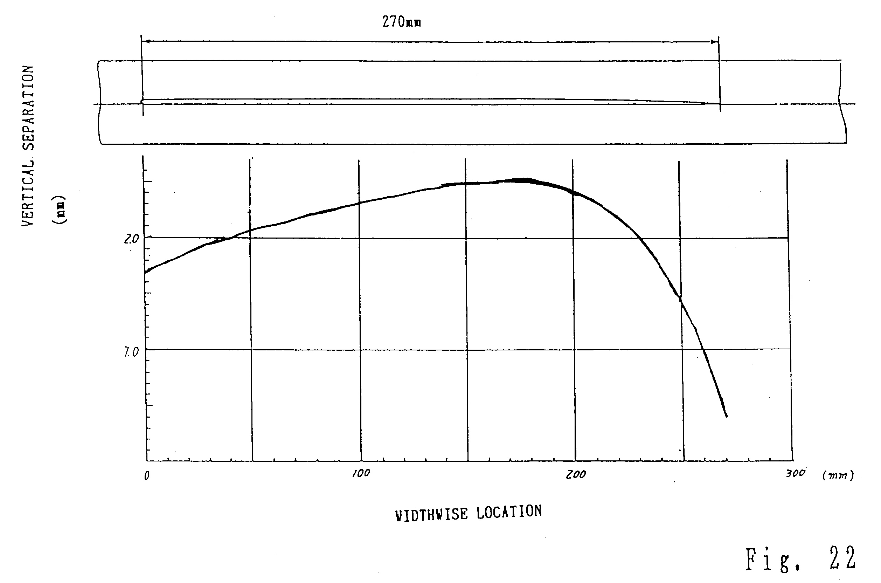

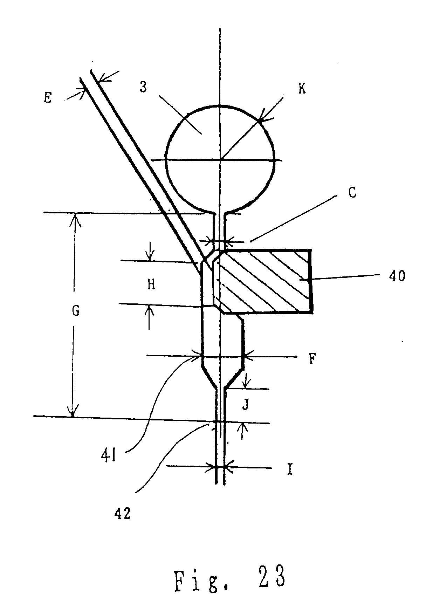

The width B of the opening 8 shown in Figure 21 is also shown in Figure 22 where applicant has presented a graph of the widthwise direction against the vertical separation of the cylindrical pipe opening 8. Since this graph does not appear as a straight line, it demonstrates that the sides are not parallel as they extend in the widthwise direction of the opening 8 for the colored resin. The dimensions given on these drawings are applicable to this third example. In Figure 23 there is shown a cross section of the main extrusion mold die of example 3. In this drawing, reference numerals 3 and 7 correspond to those shown in Figure 1. Reference numeral 40 identifies a slidable block which is used to adjust the width of the passageway marked E. Also shown is the pusher manifold 41 and the extrusion orifice 42. The dimensions of the mold at Figure 23 are as follows: C=1.2 to 2.5 mm, E=3 mm, F=14 mm, G=100 mm, H=16 mm, I=0.8 to 0.9 mm, J=20 mm, K=35 mm. In addition to these dimensions, it should be noted that the cylindrical inner pipe 2 is located as shown in Figure 21 where A=5 mm and the radius K equals 35 mm.

Table 4 gives dimensions and material flow rates for the third Example.

In Figure 24a there is shown a cross-section of the opening for the colored resin in the sidewall of the cylindrical inner pipe 2. This is shown as reference numeral 8 in Figure 1. In this preferred embodiment, the height of the opening is as shown in Figure 22. The length L is 270 mm.

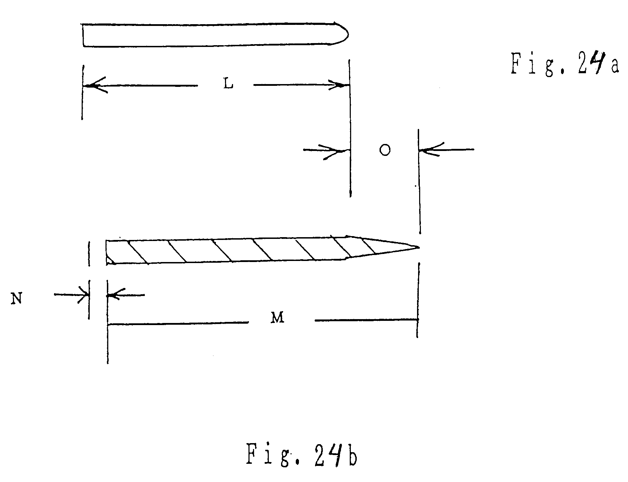

In Figure 24b there is shown a representation of the cross-section of the final extruded colored band which lies between two layers of clear resin. The effect of the widthwise flow of the clear resin upon the shape and position of the colored resin is shown in this figure. First it should be noted that the width has been extended to a new width which is 277 mm (dimension M). There is also a slight shift to the right of the entire colored section which in this embodiment is 3 mm as indicated by dimension N. Figure 24a shows dimension O which shows the shift of the end position of the leading edge of the colored resin to the right which is the sum of the increased length of the melt of the colored resin shown in Figure 24b, (M) and the shift N.

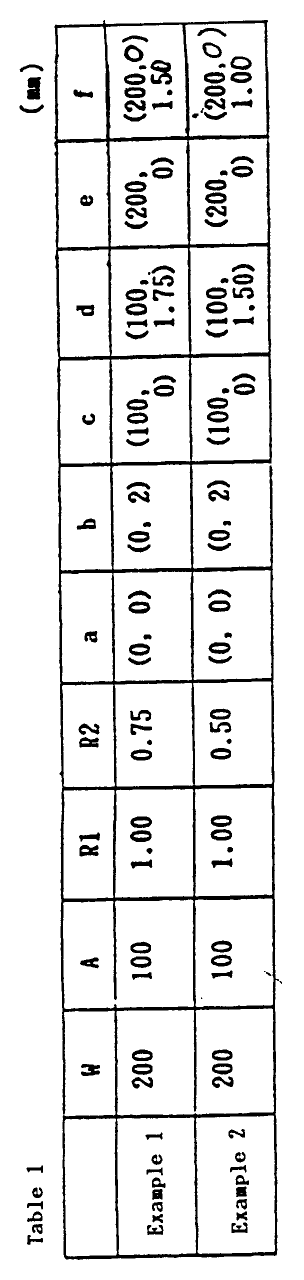

**Table 2**

| | Color width | Shade width | Ending Line |
|---|---|---|---|
| Example 1 | 256 mm | 16 mm | ○ |
| Example 2 | 255 mm | 42 mm | ○ |

**Table 3**

| | R1 | R2 | Shade width | Ending line |
|---|---|---|---|---|
| Example 3 | 2.0 | 1.5 | 19 mm | △ |
| Example 4 | 2.0 | 1.0 | 40 mm | ○ |

**Table 4**

| MOLD | |
|---|---|
| Width of Slit 6 | 1580 mm |
| Diameter of Manifold 3 | 70 mm |

| INNER TUBE 2 | |
|---|---|
| Length | 1580 mm |
| Outer Diameter (2 R 19) | 38 mm |
| Inner Diameter (2 R 12) | 24 mm |
| Shortest Distance to Manifold (A) | 5 mm |

| EXTRUSION PARAMETERS | |
|---|---|
| Clear Resin (a) Flow | 454 kg/h |
| Colored Resin (b) Flow | 60 kg/h |
| Temperature of Clear Resin (a) | 196°C |
| Temperature of Colored Resin (b) | 196°C |
| Ratio of Clear and Colored Resin Velocity | 1:1 |

## Claims

1. A process for making thermoplastic resin sheets having along their widthwise direction a first resin section (10) comprising only a clear thermoplastic resin (a) and a second resin section in which a colored band (12) comprising a colored thermoplastic resin (b) encapsulated within the first resin is formed, comprising the steps of:
(a) using an extrusion mold (1) having along its widthwise direction a clear resin (a) section manifold (3, 31), and a colored resin (b) feed means (2, 20) within said manifold (3, 31);
(b) introducing said clear resin (a) into said manifold (3, 31) and said colored resin (b) into said feed means (2, 20) including a colored resin feed passage (5);
(c) extruding said colored resin (b) and said clear resin (a) through a slit-shaped die orifice (6);
(d) providing a land (7) between said manifold (3, 31) and said slit-shaped die orifice (6);
(e) providing an opening (8) in the colored resin feed passage (5) in a position where there is widhtwise flow of said first resin (a) within said manifold (3, 31);
characterized in that said clear resin (a) is introduced from the side of said manifold (3, 31) adjacent to said colored band (12), and that the widthwise flow of said clear resin (a) is in the direction away from said colored band.

2. The process according to Claim 1 which comprises:
providing a passage (4) for supplying said clear resin (a) to said manifold (3, 31), and a colored resin feed passage (5) leading to said feed means (2, 20); and
spacing said feed means (2, 20) in a sufficient distance from said slit-shaped die orifice (6) to permit widthwise flow of said clear resin (a).

3. The process according to Claim 2 which comprises:
feeding a main flow of said clear resin (a) to said manifold (3, 31) and a colored flow of the same resin to said feed means (2, 20);
extruding both flows simultaneously to form a layer of colored resin (b) which is greater in width than said opening (8), which tapers in thickness as a result of widthwise flow of said clear resin (a), and which is completely encapsulated within the main flow of the molten resins; and
extruding the combined flows through the slit-shaped die orifice (6) to produce a shape with an encapsulated gradient colored band (12).

4. The process according to anyone of Claims 1 to 3, wherein said opening (8) has sides which are not parallel in the direction of said slit-shaped die orifice (6).

5. An apparatus for making thermoplastic resin sheets having along their widthwise direction a first resin section (10), comprising only a clear thermoplastic resin (a) and a second resin section in which a colored band (12) comprising a colored thermoplastic resin (b) is encapsulated;
comprising:
an extrusion mold (1) having along its widthwise direction a clear resin (a) section manifold (3) and a colored resin (b) feed pipe (2) within said manifold (3) including a colored resin feed passage (5);
side plates (15, 16) provided widthwise on both sides of said manifold (3) for supporting the ends of said feed pipe (2);
a passage (4) for for feeding said clear resin (a) into said manifold (3);
a slit-shaped die orifice (6) through which said clear resin (a) and said colored resin (b) are extruded;
and a land (7) provided between said manifold (3) and said slit-shaped die orifice (6);
characterized in that the clear resin (a) feed passage (4) is located at the side of said manifold (3) adjacent to said colored band (12), and that the opening (8) of said colored resin feed passage (5) is located in a position where there is widthwise flow of said clear resin (a) in the direction away from said colored band.

6. The apparatus according to Claim 5, wherein said feed pipe (2) is cylindrical.

7. The apparatus according to Claims 5 or 6, wherein said slit-shaped die orifice (6) and said opening (8) are arranged in the direction of the widthwise flow of said clear resin (a).

8. The apparatus according to anyone of Claims 5 to 7, wherein said manifold (3) and said feed pipe (2) have colored resin feed passages (5) which are at the same end of said manifold (3).

9. The apparatus according to anyone of Claim 5, 7 and 8, wherein said feed pipe (2) is conical in shape, and the distance from said manifold (3) to said feed pipe (2) varies as a function of the widthwise location.

10. An apparatus for making thermoplastic resin sheets having along their widthwise direction a first resin layer section (10) comprising only a clear thermoplastic resin (a) and a second resin section in which a colored band (12) comprising a colored thermoplastic resin (b) is encapsulated, comprising:
an extrusion mold (1) having along its widthwise direction a clear resin (a) section manifold (31), comprising a passage (4) for feeding said clear resin (a) into said manifold (31), and a slit-shaped die orifice (6) extending in the widthwise direction for extruding said clear resin section in a widthwise direction; and
a colored resin feed means;
characterized in that the colored resin feed means comprises an extrusion die plate (20) having an opening (25) extending widthwise and being located within said manifold (31) for introducing said colored resin (b) into said clear resin (a) to form two layers of said clear resin;
wherein the sides of said opening (25) are not entirely parallel to each other;
wherein the clear resin (a) feed passage (4) is located at the side of said manifold (31) adjacent to said colored band (12), and wherein the opening (25) of said colored resin feed passage is located in a position where there is widthwise flow of said clear resin (a) in the direction away from said colored band.

11. The apparatus according to Claim 10, comprising:
an inner colored resin feed passage (29) located in said manifold (31) and including said opening (25);
a colored resin feed passage (5) for supplying said colored resin (b) to said inner passage (29);
said inner feed passage (29) being spaced a sufficient distance from said slit-shaped die orifice (6) to permit widthwise flow of said clear resin (a) wherein said widthwise flow causes spreading of said colored resin (b) as it passes between said opening (25) and said slit-shaped die orifice (6), to make the width of said colored resin (b) larger than the width of said opening (25).

12. The apparatus according to Claim 11, wherein said inner feed passage (29) is a pipe, preferably a cylindrical pipe or a conical pipe.

13. The apparatus according to anyone of Claims 10 to 12, wherein said manifold (31) has a circular cross-section, or a generally triangular cross-section.

14. The apparatus according to anyone of Claims 11 to 13, wherein said inner feed passage (29) is formed in said die plate (20) to extend from the base of said triangle, and where said slit-shaped die orifice (6) is located at the tip of said triangle.

## Patentansprüche

1. Verfahren zur Herstellung von thermoplastischen Harzfolien, die entlang ihrer Richtung über die Breite einen ersten Harzabschnitt (10), der nur ein klares thermoplastisches Harz (a) enthält, und einen zweiten Harzabschnitt aufweisen, in welchem ein gefärbtes Band (12), enthaltend ein gefärbtes thermoplastisches Harz (b), das im ersten Harz eingekapselt ist, gebildet wird, umfassend die Schritte:
a) Verwendung einer Extrusionsform (1), die entlang ihrer Richtung über die Breite eine Sammelleitung (3, 31) für ein erstes klares Harz (a) und eine Zugabeeinrichtung (2, 20) für das gefärbte Harz (b) innerhalb der Sammelleitung (3, 31) hat;
b) Einführung des klaren Harzes (a) in die Sammelleitung (3, 31) und des zweiten gefärbten Harzes (b) in die Zugabeeinrichtung (2, 20), welche eine Passage (5) zur Zugabe des gefärbten Harzes enthält;
c) Extrudieren des gefärbten Harzes (b) und des klaren Harzes (a) durch eine schlitzförmige Matrizenöffnung (6);
d) Bereitstellung einer Insel (7) zwischen der Sammelleitung (3, 31) und der schlitzförmigen Matrizenöffnung (6);
e) Bereitstellung einer Öffnung (8) in der Zugabepassage (5) für das gefärbte Harz in einer Stellung, in der ein in die Breite verlaufender Fluß des ersten Harzes (a) innnerhalb der Sammelleitung (3, 31) stattfindet;
dadurch gekennzeichnet, daß das klare Harz (a) von der Seite der Sammelleitung (3, 31) eingeführt wird, die an das gefärbte Band (12) angrenzt, und daß der in die Breite verlaufende Fluß des klaren Harzes (a) in der Richtung weg von dem gefärbten Band erfolgt.

2. Verfahren nach Anspruch 1, welches umfaßt:
Bereitstellung einer Passage (4) zur Zugabe des klaren Harzes (a) zu der Sammelleitung (3, 31) und einer Zugabepassage (5) für das gefärbte Harz, die zu der Zugabeeinrichting (2, 20) führt und
Beabstandung der Zugabeeinrichtung (2, 20) in einer ausreichenden Entfernung von der schlitzförmigen Matrizenöffnung (6), um einen in die Breite verlaufenden Fluß des klaren Harzes (a) zu ermöglichen.

3. Verfahren nach Anspruch 2, welches umfaßt:
Zugabe eines Hauptflusses des klaren Harzes (a) zu der Sammelleitung (3, 31) und eines gefärbten Flusses des gleichen Harzes zu der Zugabeeinrichtung (2, 20);
gleichzeitiges Extrudieren der beiden Flüsse, um eine Schicht aus gefärbtem Harz (b) zu bilden, die eine größere Breite hat als die Öffnung (8), die sich als Ergebnis des in die Breite verlaufenden Flusses des klaren Harzes (a) in ihrer Dicke vermindert und die vollständig im Hauptfluß der geschmolzenen Harze eingekapselt ist;
Extrudieren der kombinierten Flüsse durch die schlitzförmige Matrizenöffnung (6), um einen Formkörper mit einem eingekapselten graduiert gefärbten Band (12) zu erzeugen.

4. Verfahren nach einem der Ansprüche 1 bis 3, worin die Öffnung (8) Seiten hat, die in der Richtung der schlitzförmigen Matrizenöffnung (6) nicht parallel sind.

5. Vorrichtung zur Herstellung von thermoplastischen Harzfolien, die in ihrer Richtung über die Breite einen ersten Harzabschnitt (10), der nur ein klares thermoplastisches Harz (a) enthält, und einen zweiten Harzabschnitt enthält, in welchem ein gefärbtes Band (12), enthaltend ein gefärbtes thermoplastisches Harz (b) eingekapselt ist;
enthaltend:
eine Extrusionsform (1), die entlang ihrer Richtung über die Breite eine Sammelleitung für den Anschnitt des klaren Harzes (8) sowie ein Zugaberohr (2) für das gefärbte Harz (b) innerhalb der Sammelleitung (3), enthaltend eine Passage (5) für das gefärbte Harz aufweist;
Seitenplatten (14, 16), die über die Breite auf beiden Seiten der Sammelleitung (3) angeordnet sind, um die Enden des Zugaberohres (2) zu tragen;
eine Passage (4) zur Zugabe des ersten klaren Harzes (a) in die Sammelleitung (3);
eine schlitzförmige Matrizenöffnung (6), durch die das klare Harz (a) und das gefärbte Harz (b) extrudiert werden;
und eine Insel (7) zwischen der Sammelleitung (3) und der schlitzförmigen Matrizenöffnung (6);
dadurch gekennzeichnet, daß die Zugabepassage (4) für das klare Harz (a) an der Seite der Sammelleitung (3) angrenzend an das gefärbte Band (12) angeordnet ist und daß die Öffnung (8) der Zugabepassage (5) für das gefärbte Harz an einer Stellung lokalisiert ist, an der ein in die Breite verlaufender Fluß des klaren Harzes (a) in der Richtung weg von dem gefärbten Band erfolgt.

6. Vorrichtung nach Anspruch 5, worin das Zugaberohr (2) zylindrisch ist.

7. Vorrichtung nach Anspruch 5 oder 6, worin die schlitzförmige Matrizenöffnung (6) und die Öffnung (8) in Richtung des in die Breite verlaufenden Flusses des klaren Harzes (a) angeordnet sind.

8. Vorrichtung nach einem der Ansprüche 5 bis 7, worin die Sammelleitung (3) und das Zugaberohr (2) Passagen (5) für das gefärbte Harz aufweisen, die sich an dem selben Ende der Sammelleitung (3) befinden.

9. Verfahren nach einem der Ansprüche 5, 7 und 8, worin das Zugaberohr (2) eine konische Form hat und der Abstand zwischen der Sammelleitung (3) und dem Zugaberohr (2) als Funktion ihrer Anordnung über die Breite variiert.

10. Vorrichtung zur Herstellung von thermoplastischen Harzfolien, die entlang ihrer Richtung über die Breite einen Abschnitt (10) mit einer ersten Harzschicht, die nur klares thermoplastisches Harz (a) enthält, und einen Abschnitt für das zweite Harz aufweisen, in welchem ein gefärbtes Band (12), enthaltend ein gefärbtes thermoplastisches Harz (b) eingekapselt ist, enthaltend:
eine Extrusionsform (1), die entlang ihrer Richtung über die Breite eine Sammelleitung (31) für den Abschnitt mit dem klaren Harz (a), welche eine Passage (4) zur Zugabe des klaren Harzes (a) in die Sammelleitung (31) aufweist, und eine schlitzförmige Matrizenöffnung (6) enthält, die sich über die Breite erstreckt, um den Abschnitt mit dem klaren Harz in einer Richtung über die Breite zu extrudieren; und
eine Zugabeeinrichtung für das gefärbte Harz;
dadurch gekennzeichnet, daß die Zugabeeinrichtung für das gefärbte Harz eine Extrusionsformplatte (20) mit einer Öffnung (25), die sich in Querrichtung öffnet und sich innerhalb der Sammelleitung (31) befindet, aufweist, um das gefärbte Harz (b) in das klare Harz (a) einzuführen und um zwei Schichten des klaren Harzes zu bilden;
worin die Seiten der Öffnung (25) nicht ganz parallel zueinander sind;
worin die Zugabepassage (4) für das klare Harz (a) an der Seite der Sammelleitung (31) angrenzend an das gefärbte Band (12) angeordnet ist, und worin sich die Öffnung (25) der Zugabepassage für das gefärbte Harz in einer Position befindet, in der ein über die Breite verlaufender Fluß des klaren Harzes (a) in der Richtung weg von dem gefärbten Band erfolgt.

11. Vorrichtung nach Anspruch 10 enthaltend:
eine innere Zugabepassage (29) für das gefärbte Harz, die in der Sammelleitung (31) angeordnet ist und die die genannte Öffnung (25) enthält;
eine Zugabepassage (5) für das gefärbte Harz zur Zugabe des gefärbten Harzes (b) zu der inneren Passage (29);
wobei sich die innere Zugabepassage (29) in einem ausreichenden Abstand zu der schlitzförmigen Matrizenöffnung (6) befindet, um einen in die Breite verlaufenden Fluß des klaren Harzes (a) zu ermöglichen, wobei der in die Breite verlaufende Fluß eine Ausbreitung des gefärbten Harzes (b) verursacht, wenn dieses sich zwischen der Öffnung (25) und der schlitzförmigen Matrizenöffnung (6) bewegt, um die Breite des gefärbten Harzes (b) größer als die Breite der Öffnung (25) zu machen.

12. Vorrichtung nach Anspruch 11, worin die innere Zugabepassage (29) ein Rohr, vorzugsweise ein zylindrisches oder ein konisches Rohr, ist.

13. Vorrichtung nach einem der Ansprüche 10 bis 12, worin die Sammelleitung (31) einen kreisförmigen Querschnitt oder einem im allgemeinen dreieckigen Querschnitt hat.

14. Vorrichtung nach einem der Ansprüche 11 bis 13, worin die innere Zugabepassage (29) in der Formplatte (20) gebildet ist und sich von der Basis des Dreiecks aus erstreckt, und worin die schlitzförmige Matrizenöffnung (6) an der Spitze dieses Dreiecks angeordnet ist.

## Revendications

1. Procédé de fabrication de feuilles de résine thermoplastique, ayant, le long de leur direction transversale, une première section de résine (10), comprenant seulement une résine thermoplastique transparente (a), et une deuxième section de résine, dans laquelle est formée une bande colorée (12), comprenant une résine thermoplastique colorée (b), encapsulée dans la première résine, comprenant les étapes consistant :
(a) à utiliser un moule d'extrusion (1) ayant le long de sa direction transversale un canal d'alimentation (3, 31) de section de résine transparente (a), et un moyen d'alimentation (2, 20) de résine colorée (b) à l'intérieur dudit canal d'alimentation (3, 31) ;
(b) à introduire ladite résine transparente (a) dans ledit canal d'alimentation (3, 31) et ladite résine colorée (b) dans ledit moyen d'alimentation (2, 20) comprenant un passage d'alimentation (5) de résine colorée ;
(c) à extruder ladite résine colorée (b) et ladite résine transparente (a) par l'intermédiaire d'un orifice (6) de filière plate ;
(d) à mettre à disposition une surface d'appui (7) entre ledit canal d'alimentation (3, 31) et ledit orifice de filière plate (6) ;
(e) à mettre à disposition une ouverture (8) dans le passage d'alimentation (5) de la résine colorée, en un point où il y a un écoulement transversal de ladite première résine (a) à l'intérieur dudit canal d'alimentation (3, 31) ;
caractérisé en ce que ladite résine transparente (a) est introduite à partir du côté dudit canal d'alimentation (3, 31) adjacent à ladite bande colorée (12), et en ce que l'écoulement transversal de ladite résine transparente (a) se fait dans la direction qui s'éloigne de ladite bande colorée.

2. Procédé selon la revendication 1, qui comprend les étapes consistant :
à mettre à disposition un passage (4) pour amener ladite résine transparente (a) audit canal d'alimentation (3, 31) et un passage d'alimentation (5) de résine colorée conduisant audit moyen d'alimentation (2, 20) ; et
à écarter ledit moyen d'alimentation (2, 20) à une distance suffisante dudit orifice de filière plate (6) pour permettre un écoulement latéral de ladite résine transparente (a).

3. Procédé selon la revendication 2, qui comprend les étapes consistant :
à introduire un écoulement principal de ladite résine transparente (a) dans ledit canal d'alimentation (3, 31) et un courant coloré de la même résine dans ledit moyen d'alimentation (2, 20) ;
à extruder simultanément les deux courants, pour former une couche de résine colorée (b), qui a une largeur plus grande que ladite ouverture (8), dont l'épaisseur diminue en conséquence de l'écoulement transversal de ladite résine transparente (a), et qui est complètement encapsulée dans l'écoulement principal des résines fondues ; et
à extruder les écoulements combinés à travers l'orifice de filière plate (6) pour produire une forme comportant une bande encapsulée à gradient de coloration (12).

4. Procédé selon l'une quelconque des revendications 1 à 3, dans lequel ladite ouverture (8) possède des côtés qui ne sont pas parallèles dans la direction dudit orifice de filière plate (6).

5. Appareillage pour fabriquer des feuilles de résine thermoplastique ayant le long de leur direction transversale une première section de résine (10), comprenant uniquement une résine thermoplastique transparente (a) et une deuxième section de résine, dans laquelle est encapsulée une bande colorée (12) comprenant une résine thermoplastique colorée (b) ;
comprenant :
un moule d'extrusion (1) ayant le long de sa direction transversale un canal d'alimentation (3) de section de résine transparente (a) et un tuyau d'alimentation (2) de résine colorée (b) à l'intérieur dudit canal d'alimentation (3), comprenant un passage d'alimentation (5) de résine colorée ;
des plaques latérales (15, 16), disposées transversalement sur les deux cotés dudit canal d'alimentation (3), pour soutenir les extrémités dudit tuyau d'alimentation (2) ;
un passage (4) pour introduire ladite résine transparente (a) dans ledit canal d'alimentation (3) ;
un orifice de filière plate (6) à travers lequel sont extrudées ladite résine transparente (a) et ladite résine colorée (b) ;
et une surface d'appui (7), prévue entre ledit canal d'alimentation (3) et ledit orifice de filière plate (6) ;
caractérisé en ce que le passage d'alimentation (4) de la résine transparente (a) est situé sur le côté dudit canal d'alimentation (3) adjacent à ladite bande colorée (12), et en ce que l'ouverture (8) dudit passage d'alimentation (5) de la résine colorée est située en un point où il y a un écoulement transversal de ladite résine transparente (a) dans la direction qui s'éloigne de ladite bande colorée.

6. Appareil selon la revendication 5, dans lequel ledit tuyau d'alimentation (2) est cylindrique.

7. Appareillage selon les revendications 5 ou 6, dans lequel ledit orifice de filière plate (6) et ladite ouverture (8) sont disposés dans la direction de l'écoulement transversal de ladite résine transparente (a).

8. Appareillage selon l'une quelconque des revendications 5 à 7, dans lequel ledit canal d'alimentation (3) et ledit tuyau d'alimentation (2) possèdent des passages d'alimentation (5) pour la résine colorée, qui se trouvent à la même extrémité dudit canal d'alimentation (3).

9. Appareillage selon l'une quelconque des revendications 5, 7 et 8, dans lequel ledit tuyau d'alimentation (2) a une forme conique, et la distance entre ledit canal d'alimentation (3) et ledit tuyau d'alimentation (2) varie en fonction de la localisation transversale.

10. Appareillage pour fabriquer des feuilles de résine thermoplastique ayant le long de leur direction transversale une première section de résine (10) ne comprenant qu'une résine thermoplastique transparente (a) et une deuxième section de résine dans laquelle est encapsulée une bande colorée (12) comprenant une résine thermoplastique colorée (b), comprenant :
un moule d'extrusion (1) ayant le long de sa direction transversale un canal d'alimentation (31) de section de résine transparente (a), comprenant un passage (4) pour introduire ladite résine transparente (a) dans ledit canal d'alimentation (31), et un orifice de filière plate (6) s'étendant dans la direction transversale pour extruder ladite section de résine transparente dans une direction transversale ; et
un moyen d'alimentation de la résine colorée ;
caractérisé en ce que le moyen d'alimentation de la résine comprend une plaque de filière d'extrusion (20) ayant une ouverture (25) s'étendant transversalement et étant située à l'intérieur dudit canal d'alimentation (31) pour introduire ladite résine colorée (b) dans ladite résine transparente (a) pour former deux couches de ladite résine transparente ;
où les cotés de ladite ouverture (25) ne sont pas entièrement parallèles l'un à l'autre ;
où le passage d'alimentation (4) de la résine transparente (a) est situé sur le côté dudit canal d'alimentation (31) adjacent à ladite bande colorée (12), et où l'ouverture (25) dudit passage d'alimentation de la résine colorée est situé en un point où il y a un écoulement transversal de ladite résine transparente (a) dans la direction qui s'éloigne de ladite bande colorée.

11. Appareillage selon la revendication 10, comprenant :
un passage d'alimentation interne (29) de résine colorée, situé dans ledit canal d'alimentation (31) et comprenant ladite ouverture (25) ;
un passage d'alimentation (5) pour la résine colorée, pour amener ladite résine colorée (b) audit passage interne (29) ;
ledit passage d'alimentation interne (29) étant situé à une distance dudit orifice de filière plate (6) suffisante pour permettre l'écoulement transversal de ladite résine transparente (a), où ledit écoulement transversal provoque un étalement de ladite résine colorée (b) au fur et à mesure qu'elle passe entre ladite ouverture (25) et ledit orifice de filière plate (6), pour amener la largeur de ladite résine colorée (b) à être supérieure à la largeur de ladite ouverture (25).

12. Appareillage selon la revendication 11, dans lequel ledit passage d'alimentation interne (29) est un tuyau, de préférence un tuyau cylindrique ou un tuyau conique.

13. Appareillage selon l'une quelconque des revendications 10 à 12, dans lequel ledit canal d'alimentation( 31) a une section transversale circulaire ou une section transversale généralement triangulaire.

14. Appareillage selon l'une quelconque des revendications 11 à 13, dans lequel ledit passage d'alimentation interne (29) est formé dans ladite plaque de filière (20) pour s'étendre à partir de la base dudit triangle, et où ledit orifice de filière plate (6) est situé à l'extrémité dudit triangle.
